# EUROPÄISCHE PATENTANMELDUNG

(11) **EP 3 901 886 A1**
(43) Veröffentlichungstag der Anmeldung: **27.10.2021**
(21) Anmeldenummer: 21000102.0
(22) Anmeldetag: 14.04.2021
(51) Int. Cl.: G06Q 30/04, G06Q 50/30, G06Q 20/10, G06Q 20/32, G06Q 20/40, G07F 13/02

(54) **VERFAHREN UND VORRICHTUNG ZUR VERWALTUNG UND ABRECHNUNG EINES BEZUGS VON FOSSILEN BRENNSTOFFEN, WASSERSTOFF ODER ELEKTRISCHER ENERGIE FÜR FAHRZEUGE**

(30) Priorität: 22.04.2020 CH 4742020
(71) Anmelder: Grahovac, Velibor, 9403 Goldach (CH)
(72) Erfinder: Grahovac, Velibor, 9403 Goldach (CH)

(57) **Zusammenfassung**

Die Erfindung betrifft ein Verfahren zur Verwaltung und Abrechnung eines Bezugs von fossilen Brennstoffen, Wasserstoff oder elektrischer Energie für Nutzer eines Fahrzeugs, insbesondere Kraftfahrzeugs, wie Personenwagen, Lastwagen oder Motorrad an Zapfstellen von Tankstellen oder Ladesäulen, bei dem das Fahrzeug mit einem eineindeutigen Identifikationssender und jede Zapfstelle oder Ladesäule mit einer, den Identifikationssender auslesenden Leseeinrichtung ausgestattet werden, wobei die Leseeinrichtung beim Auslesen des Identifikationssenders eine Datenverbindung mit einem zentralen Datenspeicher aufbaut, eine Berechtigungsanfrage auf Basis von aus dem Identifikationssender ausgelesenen Daten an den Datenspeicher sendet und nach einer Freigabe der Berechtigungsanfrage durch den Datenspeicher die Zapfstelle oder Ladesäule für einen Tankvorgang oder für einen Ladevorgang freischaltet, wobei nach Beendigung des Tankvorgangs oder Ladevorgangs Daten über den Tankvorgang oder Ladevorgang an den Datenspeicher zur Abrechnung des Tankvorgangs oder Ladevorgangs übermittelt und diese Daten im Datenspeicher temporär für den eineindeutigen Identifikationssender hinterlegt werden und wobei eine Abrechnung des Tankvorgangs oder Ladevorgangs auf der Basis der hinterlegten Daten über ein im Datenspeicher des Nutzers bargeldloses Zahlungsmittel ausgelöst wird.

## Beschreibung

Die Erfindung betrifft ein Verfahren zur Verwaltung und Abrechnung eines Bezugs von fossilen Brennstoffen, Wasserstoff oder elektrischer Energie für Nutzer eines Fahrzeugs, insbesondere Kraftfahrzeugs, wie Personenwagen, Lastwagen oder Motorräder an Zapfstellen von Tankstellen oder Ladesäulen. Die Erfindung betrifft ferner eine Vorrichtung zur Durchführung des Verfahrens, bestehend aus einem Identifikationssender, einer den Identifikationssender auslesenden Leseeinrichtung an einer Zapfstelle oder einer Ladesäule und einem zentralen Datenspeicher zum Empfang, zur Verarbeitung und zur zumindest temporären Speicherung von durch die Leseeinrichtung aus dem Identifikationssender ausgelesenen Daten eines Nutzers.

Fahrzeuge, insbesondere solche des Individualverkehrs, wie Kraftfahrzeuge, aber auch Sportboote oder dergleichen sind darauf angewiesen, regelmäßig mit Energie zum Betrieb eines Verbrennungsmotors oder eines Elektromotors versorgt zu werden. Seit langem bekannt sind Tankstellen, die von Fahrzeugnutzern angefahren werden können, um dort mit dem notwendigen Treibstoff, wie beispielsweise Diesel- oder Ottokraftstoff befüllt zu werden. Diese Kraftstoffe werden in entsprechende Behältnisse der Fahrzeuge aufgenommen und sind in Abhängigkeit der Fahrzeugart und/oder -größe unterschiedlich groß. Die eingefüllte Menge an Kraftstoff ist in Abhängigkeit des spezifischen Verbrauchs für eine bestimmte Fahrstreckenlänge ausreichend, sodass der Fahrzeugnutzer zu gegebener Zeit erneut eine Tankstelle ansteuern muss, um den verbrauchten Kraftstoff zu ersetzen.

Gleiches gilt im Hinblick auf die zunehmende Elektromobilität. Fahrzeughalter von Elektrofahrzeugen müssen ihre Fahrzeuge regelmäßig an Ladesäulen aufladen, um diese Fahrzeuge für eine weitere Fahrstrecke nutzen zu können.

Sowohl fossile Brennstoffe für Verbrennungsmotoren, als auch elektrische Energie oder auch Wasserstoff zum Antrieb eines Wasserstoffantriebs werden nicht kostenfrei zur Verfügung gestellt. Entsprechende Tankstellen- oder Ladesäulennetze werden von Versorgungsbetrieben zur Verfügung gestellt und unterhalten. An diesen Tankstellen oder Ladesäulen können die Fahrzeughalter die erforderlichen Energieträger kaufen.

Erschwert wird dieser Vorgang beispielsweise bei bargeldlosen Transaktionen durch Überlastungen von Datennetzen, insbesondere in stark frequentierten Zeiten, wie zur Urlaubsreisezeit. Hierdurch wird die Wartezeit der Fahrzeugnutzer ebenfalls verlängert. Auch das Einkaufen weiterer Waren findet in der Regel statt, während das Fahrzeug nach dem Tankvorgang an der Zapfstelle verbleibt, da viele Fahrzeugnutzer ihr Fahrzeug während des Einkaufs an der Zapfstelle stehen lassen und diese dadurch belegen. Selbst wenn der Fahrzeugnutzer zuvor die Zapfstelle verlässt, sodass ein weiterer Fahrzeugnutzer zur Zapfstelle vorfahren kann, ist ein nächster Tankvorgang erst dann möglich, wenn die Zapfstelle vom Kassierer freigeschaltet wird. Dies erfolgt aber erst nachdem der vorherige Tankvorgang vollständig abgerechnet ist. Auch hierdurch entstehen lange Wartezeiten an den Zapfstellen. Diese Wartezeiten sind insbesondere in Urlaubszeiten ganz erheblich.

Des Weiteren besteht das Problem, dass zunehmend Fahrzeugnutzer nach Befüllen des Vorratsbehälters die Tankstelle missbräuchlich ohne Bezahlung verlassen. Der Betreiber einer solchen Tankstelle ist dann darauf angewiesen einen solchen Betrug aufzuklären und üblich ist hierbei, dass Tankstellen technisch sehr aufwendige Überwachungsanlagen in Form von Kameras und Bildaufzeichnungsgeräten haben müssen, sodass über die aufgezeichneten Fahrzeugkennzeichen der Fahrzeugnutzer ermittelt werden kann. Der Fahrzeugnutzer ist aber nicht unbedingt der über das Kennzeichen ermittelbare Fahrzeughalter, sodass auch diesbezüglich für den Tankstellenbetreiber ein Risiko besteht, die ausgegebene Ware nicht bezahlt zu bekommen, ungeachtet der Tatsache, dass die Verfolgung derartige Missbräuche zeitaufwendig sind und dafür eine Investitions- und Wartungskosten verursachende Ausstattung erforderlich ist.

Es ist ferner üblich, dass insbesondere Unternehmen mit einer größeren Fahrzeugflotte so genannte Tankkarten nutzen. Diese Tankkarten sind individualisiert, haben aber auch keinen Mehrwert gegenüber Kreditkarten, da Tankkarten, wie auch Kreditkarten lediglich eine bargeldbehaftete Bezahlung vermeiden. Viele der voranstehend genannten Probleme, auch hinsichtlich des Missbrauchs lassen sich hierdurch nicht ausschließen.

Ausgehend von diesem Stand der Technik liegt der Erfindung die **Aufgabe** zu Grunde, eine gattungsgemäße Vorrichtung bzw. ein gattungsgemäßes Verfahren derart weiterzubilden, dass Missbrauch zulasten des Treibstofflieferanten, insbesondere Beispielsweise steuert ein Fahrzeugnutzer eine Tankstelle an, um das Vorratsbehältnis des Fahrzeugs mit einem fossilen Brennstoff aufzufüllen. Dies erfolgt in der Regel an einer Zapfstelle, die ein Zapfventil aufweist. Das Zapfventil wird in einen Tankeinfüllstutzen des Fahrzeugs eingesteckt, worauf hin der Tankvorgang gestartet wird. Nach Abschluss des Tankvorgangs muss der Fahrzeugnutzer den übernommenen fossilen Brennstoff direkt bezahlen und zu diesem Zweck begibt sich der Fahrzeugnutzer an eine Bezahlstation und kann dort den übernommenen Brennstoff mit Bargeld oder aber auch bargeldlos, beispielsweise mit einer Bank- oder Kreditkarte bezahlen, soweit ein entsprechendes Kartenlesegerät zur Verfügung steht. Die Bezahlung des bezogenen Brennstoffs kann hierbei personengebunden oder aber auch über einen Automaten ohne Bezug zu einer Person erfolgen. In der Regel erfolgt die Bezahlung an einer dafür in einem Gebäude eingerichteten Kasse, beispielsweise an einer Autobahnraststelle und viele Kunden nutzen eine solche Tankpause auch dazu weitere Waren einzukaufen, wie beispielsweise Getränke, Speisen, Andenken oder Zeitschriften.

Jeder Bezahlvorgang nimmt eine bestimmte Zeit in Anspruch, in der der Kunde und ein Kassierer mit der Bezahlung beschäftigt sind. Zu diesem Zweck nennt der Kunde dem Kassierer beispielsweise die Nummer einer Zapfsäule und der Kassierer kann dem Kunden dann den zu entrichtenden Geldbetrag nennen, der mit Bargeldübergabe oder durch einen bargeldlosen Transaktionsvorgang entrichtet wird. Hierzu wird eine Karte in ein Lesegerät eingeführt und der Kunde muss den Betrag bestätigen. Ggfs. sind auch noch weitere Daten, wie beispielsweise Kilometerstand oder eine persönliche Identifikationsnummer einzugeben. Diese Vorgehensweise ist fehler- und missbrauchsbehaftet. In dieser Zeit steht ferner die Zapfstelle für einen weiteren Tankvorgang nicht zur Verfügung. In Abhängigkeit des Verkehrsaufkommens und des Bedarfs an Brennstoffen können lange Wartezeiten an der Kasse oder den Zapfstellen entstehen, sodass eine maximale Nutzung sämtlicher Zapfstellen nur eingeschränkt möglich ist. Auch ist die Nutzung der Zapfstelle sehr stark vom Verhalten des Kunden anhängig. Geht dieser beispielsweise nach oder vor der Bezahlung auf die Toilette bleibt die Zapfstelle durch fehlende Freischaltung oder vor der Zapfstelle stehendem Fahrzeug belegt. Die Wartezeit weiterer Fahrzeugnutzer verlängert sich. eines Tankstellenbetreibers zumindest reduziert, wenn nicht gar verhindert wird und dass darüber hinaus der Tankvorgang sowohl für den Fahrzeugnutzer als auch für den Treibstofflieferanten bzw. Tankstellenbetreiber vereinfacht und insbesondere komfortabler wird.

Die **Lösung** sieht bei einem gattungsgemäße Verfahren vor, dass das Fahrzeug mit einem eineindeutigen Identifikationssender und jede Zapfstelle oder Ladesäule mit einer, den Identifikationssender auslesenden Leseeinrichtung ausgestattet werden, wobei die Leseeinrichtung beim Auslesen des Identifikationssenders eine Datenverbindung mit einem zentralen Datenspeicher aufbaut, eine Berechtigungsanfrage auf Basis von aus dem Identifikationssender ausgelesenen Daten an den Datenspeicher sendet und nach einer Freigabe der Berechtigungsanfrage durch den Datenspeicher die Zapfstelle oder Ladesäule für einen Tankvorgang oder für einen Ladevorgang freigeschaltet wird, wobei nach Beendigung des Tankvorgangs oder Ladevorgangs Daten über den Tankvorgang oder Ladevorgang an den Datenspeicher zur Abrechnung des Tankvorgangs oder Ladevorgangs übermittelt und diese Daten im Datenspeicher zumindest temporär für den eineindeutigen Identifikationssender hinterlegt werden und wobei eine Abrechnung des Tankvorgangs oder Ladevorgangs auf der Basis der hinterlegten Daten über ein im Datenspeicher des Nutzers bargeldloses Zahlungsmittel ausgelöst wird.

Bei dem erfindungsgemäßen Verfahren wird ein Tankvorgang oder auch ein Ladevorgang wesentlich komfortabler und auch sicherer hinsichtlich der Abrechnung. Der Fahrzeugnutzer, in der Regel der Fahrzeughalter oder eine von dem Fahrzeughalter legitimierte Person zur Nutzung des Fahrzeugs fährt zu diesem Zweck an eine Zapfstelle und steckt das Zapfventil in den Tankeinfüllstutzen des zu betankenden Fahrzeugs. Während dieses Vorgangs werden bereits Daten des Identifikationssenders ausgelesen und über die Leseeinrichtung an den zentralen Datenspeicher übermittelt. Im Normalfall schaltet der Datenspeicher über die Leseeinrichtung die Zapfstelle frei, sodass der Tankvorgang beginnen kann. Nach Beendigung des Tankvorgangs werden die wesentlichen Daten des Tankvorgangs, insbesondere abgegebene Menge an Brennstoff und der abzurechnende Geldbetrag an den zentralen Datenspeicher übermittelt, der bereits den eineindeutigen Identifikationssender kennt und diesem den Tankvorgang zuordnet. Die erfassten Daten des Tankvorgangs werden sodann für die Abrechnung des Tankvorgangs genutzt, in dem eine Abrechnung an den hinterlegten und registrierten Fahrzeugnutzer gesendet wird. Bevorzugt erfolgt die Bezahlung bargeldlos, d.h. der Fahrzeugnutzer hat bereits sein Einverständnis zum bargeldlosen Einzug des Rechnungsbetrags beispielsweise über seine Kreditkarte erteilt. Es ist nun für den Fahrzeugnutzer nicht mehr notwendig nach dem Tankvorgang einen individuellen Zahlvorgang, beispielsweise beim Kassierer durch Übergabe von Bargeld oder durch Übergabe einer Kreditkarte auszulösen. Vielmehr kann der Fahrzeugnutzer seine Fahrt ohne Zeitaufwand für einen Zahlvorgang fortsetzen.

Durch die erfindungsgemäße Ausgestaltung eines solchen Verfahrens wird die Verweilzeit des einzelnen Fahrzeugnutzers an einer Tankstelle deutlich reduziert. Zapfstellen können daher wesentlich häufiger innerhalb einer Zeiteinheit genutzt werden, da der gesamte Zeitaufwand für die individuelle Abrechnung eines jeden Tankvorgangs bei einem Kassierer entfällt. Möchte der Fahrzeugnutzer dennoch weitere Einkäufe tätigen, so steht ihm dies beispielsweise frei, nachdem er sein Fahrzeug von der Zapfstelle entfernt hat, so dass diese Zapfstelle für den nächsten Tankvorgang zur Verfügung steht. Die in den Tankstellen eingerichteten Kassen können daher überwiegend oder fast ausschließlich für den Verkauf von Waren genutzt werden, bei denen es sich nicht um Treibstoffe handelt. Auch ist es nicht erforderlich zu beobachten, ob ein Fahrzeugnutzer sein Fahrzeug in redlicher Absicht auf einen Parkplatz fährt oder missbräuchlich ohne Bezahlung die Tankstelle verlässt.

Des Weiteren hat das erfindungsgemäße Verfahren den Vorteil, dass mit dem Beginn des Tankvorgangs auch bereits feststeht, dass eine Bezahlung erfolgt. Das Entfernen von der Tankstelle ohne Bezahlung wird daher unmöglich. In dem Moment, in dem der zentrale Datenspeicher die Zapfsäule für den Tankvorgang freischaltet ist auch sichergestellt, dass ein Kunde bekannt ist, sodass eine Zahlung erfolgt. Es findet somit auch eine Bonitätsprüfung statt.

Nach einem weiteren Merkmal der Erfindung ist vorgesehen, dass der Identifikationssender im Bereich eines Einfüllstutzens des Fahrzeugs befestigt wird und dass die Leseeinrichtung im Bereich eines, insbesondere rohrförmigen, einen kreisrunden Querschnitt aufweisenden Zapfventils einer Zapfstelle angeordnet wird, wobei die Leseeinrichtung vorzugsweise ringförmig ausgebildet und auf das Zapfventil, dieses umgebend und aufgesetzt ist. Der wesentliche Vorteil dieser Ausgestaltung liegt darin, dass eine Vielzahl von Fahrzeugen mit entsprechenden Identifikationssendern ausgerüstet werden können, indem beispielsweise RFID-Chips in dem Bereich der Tankklappe eines Fahrzeugs angeordnet, insbesondere eingeklebt werden. Die Tankklappen von Fahrzeugen sind in der Regel über Zentralverriegelungen verriegelbar, so dass ein Zugriff auf die RFID-Chips nur bei geöffnetem Tankdeckel, nicht aber bei verschlossenem Fahrzeug möglich ist. Die RFID-Chips weisen zu diesem Zweck die notwendigen Identifikationsdaten auf, die eine eineindeutige Zuordnung ermöglichen und ausgelesen werden, wobei die eineindeutigen Identifikationsdaten von der Leseeinrichtung, die ringförmig ausgebildet und das Zapfventil Thiel umgebend angeordnet ist, erfasst werden, sodass eine sichere Auslesung der eineindeutigen Identifikationsdaten auch unabhängig von der exakten Anordnung des Identifikationssenders im Bereich des Einfüllstutzens mit großer Sicherheit möglich ist. Bei den voranstehend beschriebenen Identifikationssender ist es nicht erforderlich, dass die Identifikationssender mit Energie versorgt werden. Demzufolge müssen die Identifikationssender auch nicht an die Fahrzeugelektrik angeschlossen oder mit einer externen Batterie ausgerüstet werden. Vielmehr können diese RFID Chips als Passivtransponder ausgebildet sein, deren Daten von der Leseeinrichtung ausgelesen werden können. Die Energieversorgung einer Leseeinrichtung ist im Übrigen im Bereich der Zapfventile an Zapfstellen problemlos, da ohnehin eine Energieversorgung für jede Zapfstelle erforderlich bzw. vorhanden ist.

Da das Zapfventil in den Einfüllstutzen eingeführt wird ist auch die Distanz zwischen der Leseeinrichtung und dem Identifikationssender sehr kurz, sodass zum einen auf hohe Energiedichten bei der Datenübertragung verzichtet werden kann und zum anderen eine sichere Datenübertragung auch bei geringer Energiedichte möglich ist.

Hierbei ist es auch vorteilhaft, dass die Identifikationssender nicht aus großen Entfernungen missbräuchlich ausgelesen werden können, um beispielsweise Duplikate derartiger Identifikationssender herstellen zu können. Die Sendereichweite der Identifikationssender kann daher sehr klein gehalten werden, sodass unberechtigtes Auslesen verhindert werden kann. Ein auf eine Innenfläche eines Tankdeckels aufgeklebter Identifikationssender ist darüber hinaus durch den Tankdeckel abgeschirmt, so dass bei vergleichsweise geringer Sendeleistung ebenfalls ein Auslesen bei einem abgestellten Fahrzeug verhindert werden kann.

Auch im Bereich der Elektromobilität kann das erfindungsgemäße Verfahren eingesetzt werden. Hierbei hat es sich als vorteilhaft erwiesen, dass der Identifikationssender im Bereich einer Steckdose für ein Ladekabel des Fahrzeugs befestigt wird und dass die Leseeinrichtung im Bereich einer Steckdose zur Aufnahme des Ladekabels in die Ladesäule Daten über das Ladekabel kabelgebunden ausliest oder über das Ladekabel in die Leseeinrichtung überträgt. Um hier den größeren Abstand zwischen Ladesäule und Fahrzeug nicht einem Missbrauch zum Auslesen von Daten freizugeben, ist vorgesehen, dass die Daten nicht drahtlos, sondern nur drahtgebunden zwischen Fahrzeug und Ladesäule übertragen werden.

Nach einem weiteren Merkmal der Erfindung ist vorgesehen, dass über die Berechtigungsanfrage neben den Identifikationsdaten auch Daten zur Bonität des Nutzers abgefragt werden, wobei die Daten zur Bonität ergänzend zur Steuerung von Abgabemengen genutzt werden. So kann über diese Daten beispielsweise auch die Abgabemenge limitiert werden, sollte die Bonität des Fahrzeugführers nicht ausreichend sein. Auch besteht die Möglichkeit einer zeitlichen Limitierung, d.h. dass während einer Zeiteinheit, beispielsweise einer Woche oder eines Monats nur eine bestimmte Menge Treibstoff bezogen werden kann. Weitere Beschränkungen können ebenfalls eingestellt werden, beispielsweise die Abgabe von Treibstoff nur an bestimmten Tagen, um beispielsweise den Bezug von Treibstoffen an Wochenenden, insbesondere für Geschäftsfahrzeuge zu limitieren. Auch besteht die Möglichkeit, den Bezug von Treibstoffen auf bestimmte Tageszeiten zu limitieren, soweit beispielsweise Treibstoffpreise über den Tag hinweg zu unterschiedlichen Preisen verkauft werden.

Es ist nach einem weiteren Merkmal der Erfindung vorgesehen, dass dem Nutzer nach Beendigung des Tankvorgangs oder Ladevorgangs Daten über den Tankvorgang oder Ladevorgang, insbesondere die bezogene Menge fossilen Brennstoffs oder elektrischer Energie auf eine Anzeigevorrichtung, insbesondere ein Smartphone oder eine Anzeige im Fahrzeug übermittelt werden. Diese Daten können gespeichert werden, sodass mit diesen Daten Auswertungen beispielsweise über den Fahrzeugverbrauch gefahren werden können. Hierdurch können beispielsweise auch Vorschläge für eine verbrauchsoptimierte Fahrweise übermittelt werden.

Die voranstehend beschriebene Ausführungsform wird in vorteilhafter Weise dadurch weitergebildet, dass der Fahrzeugnutzer nach Erhalt der Daten über den Tankvorgang oder Ladevorgang eine Bestätigung der Daten quittiert und darauf basierend eine Abrechnung erstellt wird, wobei bei Ausbleiben der Bestätigung eine erneute Übertragung der zu bestätigenden Daten erfolgt und nach Ausbleiben der Bestätigung nach einer N-Übertragung der zu bestätigenden Daten im zentralen Datenspeicher eine zumindest temporäre Sperre des Identifikationssenders hinterlegt wird. Durch diese Ausgestaltung wird sichergestellt, dass der Tankvorgang von dem rechtmäßigen Fahrzeugnutzer ausgeführt wurde. Nur dem rechtmäßigen Fahrzeugnutzer wird nämlich eine Bestätigung durch Anfrage auf seinem individualisierten und hinterlegten Smartphone abverlangt. Führt der Fahrzeugnutzer das Smartphone nicht mit sich kann die Abfrage natürlich auch verschlüsselt über die Infrastruktur des Fahrzeugs, beispielsweise ein Navigationssystem erfolgen. Auch besteht die Möglichkeit der späteren Bestätigung, nämlich wenn das Smartphone wieder zugänglich oder betriebsbereit ist. Handelt es sich um einen nichtberechtigten Fahrzeugnutzer, so hat er weder das entsprechende Smartphone bei sich noch einen Code (PIN oder TAN) für die Eingabe über das Navigationssystem. Es erfolgt dann kein Quittieren und der Identifikationssender kann dann im zentralen Datenspeicher gesperrt werden, sodass ein weiterer Tankvorgang nicht ohne vorherige Freischaltung durch den rechtmäßigen Fahrzeugnutzer möglich ist. Auch besteht die Möglichkeit den rechtsmäßigen Fahrzeugnutzer in Form einer Nachricht oder Banner über den Tank oder Ladevorgang zu informieren und falls diese Daten nicht zustimmen kann derjenige Fahrzeugnutzer sein Identifikationssender über seinen Account speren. Diese Ausgestaltung verhindert weitergehenden Missbrauch. Darüber hinaus wird bei dieser Ausgestaltung auch das Auslesen von Daten des Identifikationssender durch unbefugte Dritte wertlos, da diese mit einem entsprechenden nachgearbeiteten Identifikationssender maximal einen Tankvorgang ausführen können, insoweit die Übersendung der zu quittierenden Bestätigung nicht an diese unbefugten Dritte erfolgt.

Das erfindungsgemäße Verfahren wird vorzugsweise dahingehend weitergebildet, dass im zentralen Datenspeicher Beschränkungen einer zu beziehenden Art des Brennstoffs, beispielsweise Dieselkraftstoff oder Ottokraftstoff, auch unterschiedlicher Oktanzahlen für den Identifikationssender hinterlegt werden. Hierdurch können Falschbetankung von Fahrzeugen verhindert werden. Dies ist beispielsweise ein Problem von Fahrzeugvermietern bzw. Nutzern von Fremdfahrzeugen, die nicht unbedingt erkennen können, ob es sich beispielsweise um ein mit Dieselkraftstoff oder mit Ottokraftstoff betriebenes Fahrzeug handelt. Auch dient dieser Verfahrensschritt weitergehend der Verhinderung von Missbrauch, beispielsweise dem Abfüllen von Ottokraftstoff in einen Kanister durch den Fahrzeugnutzer eines Dieselkraftstofffahrzeugs, um den Ottokraftstoff beispielsweise in einem eigenen, Fahrzeug einzusetzen. Auch können die Nutzung von hochpreisigen Kraftstoffen hoher Oktanzahlen verhindert werden, wie auch die Verwendung von Ottokraftstoffen niedriger Oktanzahlen in Fahrzeugen, die hoch-oktanige Kraftstoffe brauchen.

Dem Nutzer werden nach einem weiteren Merkmal der Erfindung temporäre Auswertungen aus den Daten im zentralen Datenspeicher zur Verfügung gestellt, wobei auch Fahrzeugdaten, wie Kilometerstand oder dergleichen aus einem Fahrzeugdatenspeicher ausgelesen und an den zentralen Datenspeicher übermittelt werden. Zu diesem Zweck ist der Identifikationssender beispielsweise an die Fahrzeuginfrastruktur angeschlossen, sodass ein direkter Zugriff auf den Kilometerstand des Fahrzeugs möglich ist, der dann an den zentralen Datenspeicher übermittelt wird. Des Weiteren können Daten aus dem Navigationssystem eines Fahrzeugs herangezogen werden, um mit dem bestehenden Treibstoffinhalt eine wirtschaftlich optimale Fahrzeugroute anzuzeigen.

Hinsichtlich der Abrechnung der bezogenen Leistungen ist vorgesehen, dass Betreibern von Tankstellen und/oder Ladestationen die Daten aus dem zentralen Datenspeicher anonymisiert übermittelt werden und darauf basierend eine Abrechnung erstellt wird. Diese Ausführungsform dient insbesondere dem Datenschutz.

Für den Betreiber einer Tankstelle oder einer Ladestation ist es nicht erforderlich Kenntnis über den Bezieher der Leistung in Person des Fahrzeugnutzers zu haben. Vertragspartner ist hier der Betreiber des zentralen Datenspeichers, der von dem Betreiber der Tankstelle oder der Ladestation lediglich einen Wert übermittelt bekommt, der der entsprechenden Leistung unabhängig vom Bezieher der Leistung entspricht. Im Gegenzug entrichtet der Betreiber des zentralen Datenspeichers die Bezahlung für die bezogene Leistung, die der Betreiber des zentralen Datenspeichers dann wiederum gegenüber seinen Kunden abrechnet. Zu diesem Zweck kennt der Betreiber des zentralen Datenspeichers die einzelnen Bezugswerte, nämlich Datum des Bezugs, Nutzer des Bezugs und Umfang des Bezugs, sodass eine individualisierte Abrechnung gegenüber den einzelnen Nutzern erfolgen kann. Eine solche Abrechnung kann periodisch, beispielsweise monatlich erfolgen, sodass auch der Aufwand der Abrechnungen verringert werden kann. Gleiches gilt für den Betreiber einer Tankstelle oder einer Ladestelle Ladestation, der auch nicht darauf angewiesen ist jeden einzelnen Bezugsvorgang separat abzurechnen, sondern die Einzelabrechnungen in einer Abrechnung gegenüber dem Betreiber des zentralen Datenspeichers zusammenzufassen kann, da er nur noch einen Vertragspartner, nämlich den Betreiber des zentralen Datenspeichers hat. Für den Betreiber des zentralen Datenspeichers können sich hieraus auch weitere Vorteile bezüglich des Einkaufs des Kraftstoffs, insbesondere bei Abnahme größerer Mengen, Vorauszahlungen oder dergleichen ergeben.

Um eine schnelle Datenübertragung zwischen der Leseeinrichtung und dem zentralen Datenspeicher zu ermöglichen ist weiterhin vorgesehen, dass die Daten von der Leseeinrichtung zum zentralen Datenspeicher und vom zentralen Datenspeicher zur Leseeinrichtung bi-direktional übertragen werden und die Leseeinrichtung zu diesem Zweck zwei getrennte Sende-Empfangs-Vorrichtungen aufweist. Durch diese Ausgestaltung können bei Beginn des Tankvorgangs sehr schnell die erforderlichen Daten an den zentralen Datenspeicher übermittelt werden. Im Gegenzug und ohne zeitliche Verzögerung werden die Daten über die Zulässigkeit des Bezugs, insbesondere über die Bonität des beziehenden Nutzers übermittelt, sodass eine Freischaltung der Zapfsäule erfolgen kann. Hier hat der Betreiber einer Tankstelle den großen Vorteil, dass er nicht auf eine Überprüfung seines Kunden angewiesen ist. Eine Freischaltung der Zapfsäule muss nicht mehr manuell vom Betreiber der Tankstelle oder im Anschluss an einen Bezahlvorgang automatisiert erfolgen.

Hinsichtlich der erfindungsgemäßen Vorrichtung zur Durchführung des voranstehend beschriebenen Verfahrens ist zur **Lösung** der Aufgabenstellung auszuführen, dass diese Vorrichtung aus einem Identifikationssender zur Befestigung an einem Fahrzeug, einer den Identifikationssender auslesenden Leseeinrichtung zur Befestigung an einer Zapfstelle oder einer Ladesäule und einem zentralen Datenspeicher zum Empfang, zur Verarbeitung und zur zumindest temporären Speicherung von durch die Leseeinrichtung aus dem Identifikationssender ausgelesenen Daten eines Nutzers besteht. Bei dieser Vorrichtung ist vorgesehen, dass die Daten über eine Datenverbindung dem zentralen Datenspeicher übermittelt und zur Verifizierung einer Berechtigung genutzt werden, wobei der zentrale Datenspeicher über eine Schnittstelle mit einer Abrechnungsvorrichtung verbunden ist. Bei der Nutzung dieser Vorrichtung für Ladesäulen ist der Identifikationssender im Bereich einer Steckdose für ein Ladekabel des Fahrzeugs befestigt ist und die Leseeinrichtung im Bereich der in einer Steckdose zur Aufnahme des Ladekabels in der Ladesäule angeordnet. Die Daten werden über das Ladekabel kabelgebunden aus der Leseeinrichtung ausgelesen oder über das Ladekabel in die Leseeinrichtung übertragen.

Alternativ ist vorgesehen, dass bei einer Zapfstelle die Leseeinrichtung an einem Zapfventil angeordnet ist, wobei die Leseeinrichtung vorzugsweise ringförmig ausgebildet und auf das Zapfventil, dieses umgebend aufgesetzt ist.

Die Abrechnungsvorrichtung weist vorzugsweise eine Schnittstelle zum Anschluss einer Datenverarbeitungseinrichtung einer, Zahlungen ausführenden Einrichtung auf.

Weitere Merkmale und Vorteile der erfindungsgemäßen Vorrichtung bzw. des erfindungsgemäßen Verfahrens ergeben sich aus der nachfolgenden Beschreibung der zugehörigen Zeichnung. In der Zeichnung zeigen:
- Figur 1: eine erste Ausführungsform eines schematischen Aufbaus einer Vorrichtung zur Durchführung des erfindungsgemäßen Verfahrens und
- Figur 2: eine zweite Ausführungsform eines schematischen Aufbaus einer Vorrichtung zur Durchführung des erfindungsgemäßen Verfahrens.

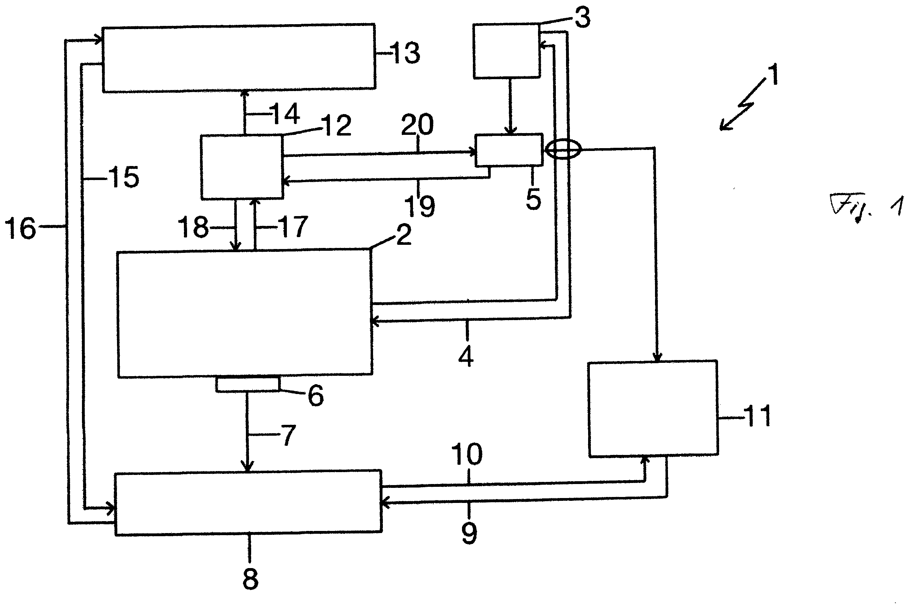

Figur 1 zeigt einen schematischen Aufbau einer Vorrichtung zur Durchführung des voranstehend beschriebenen Verfahrens.

Die Vorrichtung 1 weist einen zentralen Datenspeicher 2 auf, in dem Daten eines Fahrzeughalters 3 gespeichert sind. Diese Daten werden über eine Datenleitung 4 übertragen und bestehen insbesondere aus Identifikationsdaten, wie Namen, Anschrift und Bankdaten, die der Abrechnung empfangener Leistungen dienen. Des Weiteren können über die Datenleitung 4 Daten zum Fahrzeug 5, wie beispielsweise Fahrzeugkennzeichen, Fahrzeugtyp, Treibstoffart etc. übermittelt und gespeichert werden. Für jeden Fahrzeughalter 3, der das Verfahren nutzt wird ein Datensatz gespeichert, der eine Zuordnung und Abrechnung empfangener Leistungen ermöglicht. Diesbezüglich können auch Datensätze mehrerer Fahrzeugnutzer gespeichert werden, die einem Fahrzeughalter 3 oder auch einem Fahrzeug 5 zugeordnet werden. Der Fahrzeughalter 3 wird in diesem Fall als wirtschaftlich verantwortlich geführt.

Der zentrale Datenspeicher 2 weist eine Schnittstelle 6 auf, an die eine Datenleitung 7 als Verbindung zu einer Abrechnungsvorrichtung 8 angeschlossen ist. Die Abrechnungsvorrichtung 8 ist über eine Datenleitung 9 und eine Datenleitung 10 mit einer, Zahlungen ausführenden Einrichtung 11 verbunden. Bei der Einrichtung 11 kann es sich um eine Bank oder ein Kreditkartenunternehmen handeln, welches im Auftrag des Fahrzeughalters 3 Zahlungen ausführt bzw. Zahlungsvorleistungen für den Fahrzeughalter 3 erbringt.

Des Weiteren zeigt die Figur eine Zapfstelle 12 eines Betreibers 13. Die Zapfstelle 12 ist über eine Datenleitung 14 mit dem Betreiber 13 verbunden, der wiederum über zwei Datenleitungen 15 und 16 mit der Abrechnungsvorrichtung 8 verbunden ist. Der Betreiber 13 hat eine oder mehrere Tankstellen mit einer oder mehreren Zapfstellen 12. Somit handelt es sich bei dem Betreiber 13 beispielsweise um einen Mineralölkonzern.

Über die Tankstellen werden Mineralölprodukte, insbesondere Otto- und Dieselkraftstoff verkauft. Weitere Waren werden angeboten, wie beispielsweise Speisen und Getränke, sowie Zeitschriften. Es können auch Serviceleistungen angeboten werden. Mit dem hier beschrieben Verfahren und der dazu eingesetzten Vorrichtung wird der Verkauf der Mineralölprodukte abgerechnet. Es besteht aber auch die Möglichkeit Ladesäulen eines Anbieters elektrischer Energie für elektrisch angetriebene Fahrzeuge mit diesem Verfahren abzurechnen. Gleiches gilt für Wasserstoff zum Antrieb von mit einem Wasserstoffantrieb ausgebildeten Fahrzeugen.

Die Zapfstelle 12 ist des Weiteren über zwei Datenleitungen 17 und 18 mit den zentralen Datenspeicher 2 verbunden. Des Weiteren besteht eine Verbindung zur Datenübertragung zwischen der Zapfstelle 12 und dem Fahrzeug 5 während eines Tankvorgangs, wobei über einen Datenleitung 19 Identifikationsdaten des Fahrzeugs 5 an die Zapfstelle 12 übertragen werden. Im Gegenzug werden über eine Leitung 20 Treibstoff in einen Vorratsbehälter des Fahrzeugs 5 eingeleitet.

Die zwischen dem Fahrzeug 5 und der Zapfstelle 12 übermittelten Daten werden an den zentralen Datenspeicher 2 zur Speicherung und Verifikation des Tankvorgangs übermittelt. Zu diesem Zweck werden die Identifikationsdaten des Fahrzeughalters 3 an den zentralen Datenspeicher 2 übermittelt und im zentralen Datenspeicher 2 auf Plausibilität und Zulässigkeit geprüft. Bei positivem Prüfungsergebnis erteilt der zentrale Datenspeicher die Zustimmung zum Tankvorgang und der Tankvorgang beginnt. Die Identifikationsdaten sind in einem RFID-Chip gespeichert, den der Betreiber des zentralen Datenspeichers 2 dem Fahrzeughalter 3 zur Montage im Bereich des Tankeinfüllstutzens seines Fahrzeugs 5 übergibt. Die Identifikationsdaten auf den RFID-Chip sind eineindeutig und werden im zentralen Datenspeicher 2 dem Fahrzeughalter 3 zugeordnet. Seitens der Zapfstelle 12 ist ein an sich bekanntes Zapfventil vorgesehen, welches in an sich bekannter Weise in den Tankeinfüllstutzen des Fahrzeugs 5 einsteckbar ist. Dieses Zapfventil ist mit einem ringförmigen Rohrabschnitt ausgebildet auf das eine ringförmige Leseeinrichtung aufgesteckt ist, mit der die im RFID-Chip gespeicherten Daten ausgelesen werden und über die Datenleitung 18 an den zentralen Datenspeicher 18 übertragen werden. Um den Verifikationsvorgang möglichst schnell ausführen zu können ist eine zweite Datenleitung 17 vorgesehen, die die Daten zur Verifikation und Freischaltung der Zapfstelle 12 an die Zapfstelle 12 überträgt. Die Datenübertragung zwischen dem zentralen Datenspeicher 2 und der Zapfstelle 12 erfolgt daher bi-direktional.

Im Einzelnen ist folgender Ablauf eines Tank- und Abrechnungsvorgang vorgesehen:
Der Fahrzeughalter 3 oder gegebenenfalls ein von dem Fahrzeughalter 3 berechtigter Fahrzeugnutzer fährt mit dem Fahrzeug 5 zur Betankung des Fahrzeugs 5 an eine Zapfstelle 12. Nach Öffnung des Tankeinfüllstutzen des Fahrzeugs 5 steckt der Fahrzeughalter 3 ein Zapfventil ein. Der im Bereich des Einfüllstutzens angeordnete Identifikationssender in Form des RFID-Chips wird durch die Leseeinrichtung ausgelesen. Die ausgelesenen Identifikationsdaten des Fahrzeugs 5 bzw. des Fahrzeughalters 3 werden über die Datenleitung 19 und die Datenleitung 18 dem zentralen Datenspeicher 2 übermitteltet. Es erfolgt die Verifikation des Fahrzeughalters 3 und die Freischaltung der Zapfstelle 12 für einen Tankvorgang. Der zentrale Datenspeicher 2 sendet nach Prüfung der erhaltenen Daten über die Datenleitung 17 Verifikations- und Freischaltungsdaten an die Zapfstelle 17, wodurch der Tankvorgang bei zutreffender Verifikation gestartet wird. Nach Abschluss des Tankvorgangs, nämlich Entnahme des Zapfventils aus dem Einfüllstutzen übermittelt die Zapfstelle 12 die über die Leitung 20 zugeführte Menge an Treibstoff und die damit verbundene Abrechnungsgröße (Preis) über die Datenleitung 18 an den zentralen Datenspeicher 2 und über die Datenleitung 14 an den Betreiber 13.

Der Betreiber 13 weist in einem Rechenzentrum einen Speicher auf, der die gesammelten Daten der einzelnen Tankvorgänge speichert und zur gegebenen Zeit in Form einer Abrechnung über die Datenleitung 15 an die Abrechnungsvorrichtung 8 übermittelt. Über die Abrechnungsvorrichtung 8 erfolgt sodann die Prüfung der Abrechnung sowie über die Datenleitung 16 die Auslösung der Zahlung an den Betreiber 13. Zu diesem Zweck vergleicht die Abrechnungsvorrichtung 8 die erhaltenen Abrechnungsdaten des gesamten Abrechnungsvorgang eines Zeitraums mit im zentralen Datenspeicher 2 abgelegten einzelnen Transaktionsdaten des identischen Zeitraums.

Für den Betreiber 13 ist es hierbei nicht erforderlich die Daten des Fahrzeughalters 3 oder des Fahrzeugs 5 zu kennen oder zu erfassen. Der Betreiber 13 unterhält zu diesem Zweck eine Geschäftsbeziehung mit dem Betreiber des zentralen Datenspeichers 2. Der Betreiber des zentralen Datenspeichers 2 wiederum hat Geschäftsbeziehungen mit einer Vielzahl von Kunden, wobei jeder Kunde individualisiert über den Fahrzeughalter 3 und verstrich oder das Fahrzeug 5 im zentralen Datenspeicher 2 abgelegt ist.

Im zentralen Datenspeicher 2 werden für jeden Fahrzeughalter die einzelnen Tankvorgänge erfasst und gespeichert. Die gespeicherten Tankvorgängen können dann für ein Zeitinterval abgerechnet werden. Die kann zum Beispiel monatlich erfolgen. Die erfassten Abrechnungsdaten der einzelnen individualisierten Tankvorgänge werden an den jeweiligen Fahrzeughalter 3 übermittelt. Gleichzeitig übermittelt der zentrale Datenspeicher 2 über die Datenleitung 7 die gesamten abzurechnenden Tankvorgänge als Datensatz an die Abrechnungsvorrichtung 8, die wiederum mit der Einrichtung 11 über die Datenleitungen 9 und 10 kommuniziert, wobei die Datenleitung 10 der Übermittlung der Abrechnungen von der Abrechnungsvorrichtung 8 an die Einrichtung 11 dient und die Datenleitung 9 die Zahlungsdaten übermittelt.

Von der Abrechnungsvorrichtung 8 werden über die Datenleitung 10 die individualisierten Abrechnungen der einzelnen Fahrzeughalter 3 übermittelt, sodass über die Einrichtung 11 die einzelnen Fahrzeughalter 3 mit den entsprechenden Abrechnungsbeträgen belastet werden. Zu diesem Zweck haben die Fahrzeughalter 3 Einzugsermächtigungen für Individualkonten an die Abrechnungsvorrichtung 8 bzw. die Einrichtung 11 übermittelt oder können ein dort geführtes Konto durch Geldanweisung füllen.

Der wesentliche Vorteil liegt nun darin, dass der Betreiber des zentralen Datenspeichers 2 seinen Kunden, den Fahrzeughaltern 3 ein System zur Verfügung stellt, welches eine beschleunigte Abwicklung von Tankvorgängen ermöglicht, in dem der Fahrzeughalter 3 keine individualisierten Zahlungsvorgänge nach jedem Tankvorgang leisten muss. Vielmehr werden die Abrechnungen über den Betreiber des zentralen Datenspeichers 2 und den Betreiber 13, beispielsweise Tankstellenbetreiber oder Mineralölkonzerne abgewickelt. Seitens der Betreiber 13 besteht der Vorteil, dass keine Einzelabrechnungen jedem Fahrzeughalter 3 nach jedem Tankvorgang notwendig sind. Dies auch nicht in Verbindung mit Kreditkarten oder Tankkarten. Es können somit die Nutzung der Zapfstellen 12 deutlich erhöht werden. Eingesetztes Personal kann reduziert werden oder sich auf den Verkauf anderer Waren konzentrieren. Solche Waren haben in der Regel für den Betreiber 13 einen größeren Gewinnanteil im Vergleich zum Verkauf der Mineralölprodukte. Für die Fahrzeughalter 3 bzw. Fahrzeugnutzer liegt ein wesentlicher Vorteil in den kürzeren Tankzeiten durch die Verringerung der Wartezeiten an den Zapfstellen und durch die zentralisierte Abrechnung, die einen Verzicht auf eine Identifikation bei jedem Tankvorgang ermöglicht.

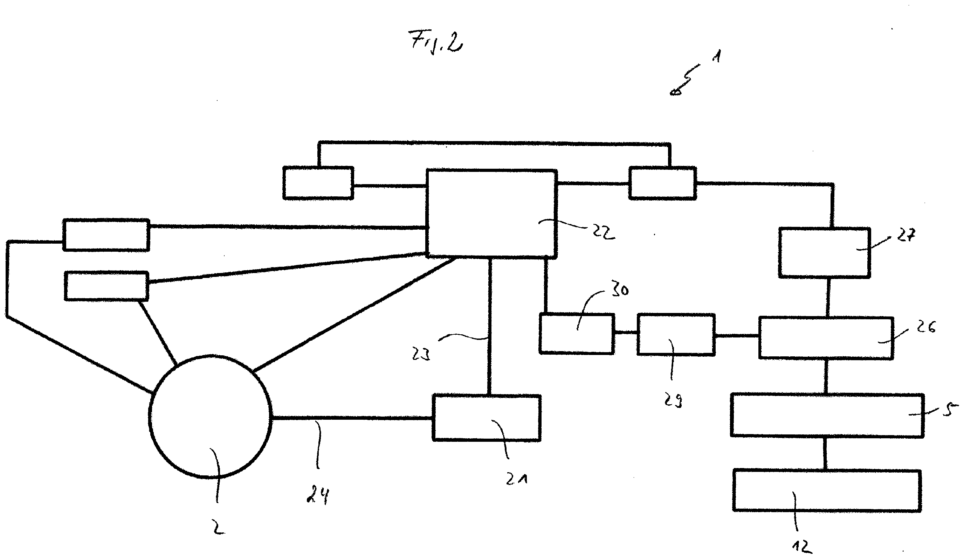

Eine zweite Ausführungsform eines schematischen Aufbaus einer Vorrichtung zur Durchführung des erfindungsgemäßen Verfahrens ist in Figur 2 dargestellt. Auf den zentralen Datenspeicher 2 können diverse Anbieter von Energie, wie Treibstoff oder elektrische Energie für die Individualmobilität zugreifen, von den in Figur 2 nur ein Anbieter 21, beispielsweise ein Mineralölkonzern dargestellt ist. Der Anbieter 21 ist ferner an eine Vielzahl von Versorgungseinrichtungen, wie Tankstellen oder Ladestationen angeschlossen, von denen in Figur 2 eine Versorgungseinrichtung 22 dargestellt ist.

Über eine Datenleitung 23 erhält der Anbieter 21 Daten von der Versorgungseinrichtung 22, so dass einzelne Tank- oder Ladevorgänge bei Anbieter 21 bekannt werden, die über eine Datenleitung 24 an den Datenspeicher 2 übermittelbar sind. Im Gegenzug können über die Datenleitung 24 im Datenspeicher 2 gespeicherte Daten an den Anbieter 21 übermittelt werden, so dass auch ein Datenvergleich möglich ist.

Über eine Datenleitung 25 werden die, Tank- oder Ladevorgänge bei der Versorgungseinrichtung 22 betreffenden Daten an den Datenspeicher 2 übertragen.

Hierbei handelt es sich um Daten, die im Bereich der Versorgungseinrichtung 22 bei jedem Tank- oder Ladevorgang erfasst werden und einem individuellen Nutzer zugeordnet werden können.

So hat eine Versorgungseinrichtung 22 mehrere Ausgabestellen, beispielsweise Zapfstellen 12 oder Ladestationen, die jeweils mit einem Datenlesegerät 26 ausgestattet sind und Daten aus einem, in einem Fahrzeug 5 angeordneten Datenspeicher ausliest. Der Datenspeicher identifiziert das Fahrzeug 5 eineindeutig, so dass der Bezug der Energie einem bestimmten Fahrzeug 5 zugeordnet wird. Für dieses Fahrzeug 5 sind im Datenspeicher 2 verschiedene Daten hinterlegt, wie zum Beispiel Nutzer oder Eigentümer des Fahrzeugs 5, verbunden mit einer Zahlungsdatei, aus der sich die Zahlungsart, die Bonität, der Abrechnungsmodus, das Abrechnungsinterval oder dergleichen ergibt. Für das Fahrzeug 5 kann zum Beispiel die Kraftstoffart Benzin oder Diesel hinterlegt sein, so dass Fehlbetankungen vermieden werden.

Die aus dem 5 Fahrzeug ausgelesenen Daten werden an einen Empfänger 27 übertragen. Die Übertragung kann drahtlos erfolgen, so dass ein Empfänger 27 für mehrere Datenlesegeräte 26 einer Versorgungseinrichtung 22 genutzt werden kann.

Vom Empfänger werden die aus dem Fahrzeug 5 ausgelesenen Daten über ein Terminal in der Versorgungseinrichtung 22 an einen, Zahlungen verwaltenden Provider 28 übermittelt und nach Prüfung erteilt der Provider 28 die Freischaltung der Zapfstelle 12. Die Freischaltung erfolgt über den Terminal der Versorgungseinrichtung 22 und kann auch damit verbunden sein, dass einem Nutzer an der Zapfstelle 12 signalisiert wird, dass ein Bezug der gewünschten Energie möglich ist oder dass nach dem Bezug der gewünschten Energie eine Bezahlung vor bei der Versorgungseinrichtung 22 erforderlich, da beispielsweise der Datenspeicher im Fahrzeug 5 nicht erkannt wurde oder eine Bonität bzw. Abrechnungsmethode nicht ausreichend hinterlegt ist. Ferner kann vorgesehen sein, dass in diesem Fall die Zapfstelle mechanisch freigeschaltet werden. Dies kann auch durch ein Smartphone ausgeführt werden, welches eine Software zur Zahlung aufweist. Gleiches gilt für ein Lesegerät zum Auslesen von Daten einer Kredit- oder Bankkarte, so dass eine Zahlung sichergestellt ist.

Zu diesem Zweck weist die Vorrichtung 1 eine Schalteinrichtung 29 auf, die einerseits im Bereich der Zapfstelle 12 angeordnet ist und Daten an das Datenlesegerät 26 sendet, um beispielsweise optische und/oder akustische Signale zu generieren. Bevorzugt handelt es sich um zwei optische Signale ausgegeben von einer roten und einer grünen LED. Leuchtet lediglich die rote LED wird dem Nutzer signalisiert, dass eine automatisierte Bezahlung nicht möglich und die Zapfstelle 12 manuell freizuschalten ist, so dass der Nutzer nach Beendigung des Energiebezugs den Zahlungsvorgang in einem Kassenbereich der Versorgungseinrichtung 22 auszuführen hat.

Leuchtet die grüne LED wird dem Nutzer signalisiert, dass das Verfahren bestimmungsgemäß durchgeführt werden kann und somit sämtliche erforderliche daten erfasst sind, die es ermöglich, dass der Nutzer unmittelbar nach dem Energiebezug weiterfahren kann, ohne zuvor einen Zahlungsvorgang vornehmen zu müssen.

Leuchten beide LED wird dem Nutzer signalisiert, dass der Vorgang des Energiebezugs in Vorbereitung ist, beispielsweise die Daten erfasst und die Bonität geprüft wird.

Andererseits ist die Schalteinrichtung 29 mit einer Schnittstelle 30 verbunden, über die Daten über die Zahlungsart, die Bonität oder dergleichen an die Zapfstelle 12 gesendet werden.

Bei der in Figur 2 dargestellten zweiten Ausführungsform kann auch eine Betriebsweise vorgesehen sein, bei der die Zapfstelle 12 freigeschaltet ist, so dass ein Fahrzeug 5 jederzeit betankt werden kann. Wird bei dieser Vorgehensweise eine Zapfpistole der Zapfstelle 12 in einen Tankeinfüllstutzen eines Fahrzeugs 5 eingesetzt kommuniziert die Datenleseeinrichtung 26 mit einem das Fahrzeug 5 eineindeutigen Datensender, bei dem es sich beispielsweise um einen RFID-Chip im Bereich des Tankeinfüllstutzen handeln kann. Bei der Prüfung werden Daten aus dem zentralen Datenspeicher 2, wie beispielsweise die Bonität und/oder die Treibstoffart für das Fahrzeug 5 abgefragt. Wird bei dieser Prüfung festgestellt, dass die Bonität für einen Tankvorgang nicht ausreicht und/oder das Fahrzeug mit der falschen Treibstoffart betankt wird, wird der Tankvorgang nach einem kurzen Zeitintervall von beispielsweise zwei Sekunden abgebrochen. Über die Schalteinrichtung 29 im Bereich der Zapfstelle 12 werden optische und/oder akustische Signale generiert, die dem Nutzer anzeigen, dass der Tank- und Bezahlvorgang nicht automatisiert ausgeführt werden kann. Neben der Anzeige der optischen Signale über die rote und die grüne LED kann auch ein akustisches Signal, beispielsweise in Form einer Sprachnachricht ausgegeben werden. Der Nutzer kann das Signal quittieren und ist dadurch auch informiert, dass die Bezahlung in an sich bekannter Weise an der Kasse zu erfolgen hat und/oder dass eine Betankung mit einer nicht zulässigen Treibstoffart erfolgen kann. Durch ein Quittieren des Signals kann der Nutzer den Tankvorgang manuell fortsetzen, ist aber durch das Signal in seiner Aufmerksamkeit gewarnt, um den Tankvorgang zu überprüfen.

**Bezugszeichenliste:**

| | | | |
|---|---|---|---|
| 1 | Vorrichtung | 21 | Anbieter |
| 2 | Zentrale Datenspeicher | 22 | Versorgungseinrichtung |
| 3 | Fahrzeughalter | 23 | Datenleitung |
| 4 | Datenleitung | 24 | Datenleitung |
| 5 | Fahrzeug | 25 | Datenleitung |
| 6 | Schnittstelle | 26 | Datenlesegerät |
| 7 | Datenleitung | 27 | Empfänger |
| 8 | Abrechnungsvorrichtung | 28 | Provider |
| 9 | Datenleitung | 29 | Schalteinrichtung |
| 10 | Datenleitung | 30 | Schnittstelle |
| 11 | Einrichtung | | |
| 12 | Zapfstelle | | |
| 13 | Betreiber | | |
| 14 | Datenleitung | | |
| 15 | Datenleitung | | |
| 16 | Datenleitung | | |
| 17 | Datenleitung | | |
| 18 | Datenleitung | | |
| 19 | Datenleitung | | |
| 20 | Leitung | | |

## Patentansprüche

1. Verfahren zur Verwaltung und Abrechnung eines Bezugs von fossilen Brennstoffen, Wasserstoff oder elektrischer Energie für Nutzer eines Fahrzeugs, insbesondere Kraftfahrzeugs, wie Personenwagen, Lastwagen oder Motorrad an Zapfstellen von Tankstellen oder Ladesäulen, bei dem das Fahrzeug mit einem eineindeutigen Identifikationssender und jede Zapfstelle oder Ladesäule mit einer, den Identifikationssender auslesenden Leseeinrichtung ausgestattet werden, wobei die Leseeinrichtung beim Auslesen des Identifikationssenders eine Datenverbindung mit einem zentralen Datenspeicher aufbaut, eine Berechtigungsanfrage auf Basis von aus dem Identifikationssender ausgelesenen Daten an den Datenspeicher sendet und nach einer Freigabe der Berechtigungsanfrage durch den Datenspeicher die Zapfstelle oder Ladesäule für einen Tankvorgang oder für einen Ladevorgang freischaltet, wobei nach Beendigung des Tankvorgangs oder Ladevorgangs Daten über den Tankvorgang oder Ladevorgang an den Datenspeicher zur Abrechnung des Tankvorgangs oder Ladevorgangs übermittelt und diese Daten im Datenspeicher temporär für den eineindeutigen Identifikationssender hinterlegt werden und wobei eine Abrechnung des Tankvorgangs oder Ladevorgangs auf der Basis der hinterlegten Daten über ein im Datenspeicher des Nutzers bargeldloses Zahlungsmittel ausgelöst wird.

2. Verfahren nach Anspruch 1,
**dadurch gekennzeichnet,**
**dass** der Identifikationssender im Bereich eines Einfüllstutzens des Fahrzeugs befestigt wird und dass die Leseeinrichtung im Bereich eines, insbesondere rohrförmigen, einen kreisrunden Querschnitt aufweisenden Zapfventils einer Zapfstelle angeordnet wird, wobei die Leseeinrichtung vorzugsweise ringförmig ausgebildet und auf das Zapfventil, dieses umgebend aufgesetzt ist.

3. Verfahren nach Anspruch 1,
**dadurch gekennzeichnet,**
**dass** der Identifikationssender im Bereich einer Steckdose für ein Ladekabel des Fahrzeugs befestigt wird und dass die Leseeinrichtung im Bereich einer Steckdose zur Aufnahme des Ladekabels in die Ladesäule Daten über das Ladekabel kabelgebunden aus der Leseeinrichtung ausliest oder über diese in die Leseeinrichtung überträgt.

4. Verfahren nach einem der Ansprüche 1 bis 3,
**dadurch gekennzeichnet,**
**dass** über die Berechtigungsanfrage neben den Identifikationsdaten auch Daten zur Bonität des Nutzers abgefragt werden, wobei die Daten zur Bonität ergänzend zur Steuerung von Abgabemengen genutzt werden.

5. Verfahren nach einem der Ansprüche 1 bis 4,
**dadurch gekennzeichnet,**
**dass** dem Nutzer nach Beendigung des Tankvorgangs oder Ladevorgangs Daten über den Tankvorgang oder Ladevorgang, insbesondere bezogene Menge fossilen Brennstoffs oder elektrischer Energie auf eine Anzeigeeinrichtung, insbesondere ein Smartphone oder eine Anzeige im Fahrzeug übermittelt wird.

6. Verfahren nach Anspruch 5,
**dadurch gekennzeichnet,**
**dass** der Nutzer nach Erhalt der Daten über den Tankvorgang oder Ladevorgang eine Bestätigung der Daten quittiert und darauf basierend eine Abrechnung erstellt wird, wobei bei Ausbleiben der Bestätigung eine erneute Übertragung der zu bestätigenden Daten erfolgt und nach Ausbleiben der Bestätigung nach einer n-ten Übertragung der zu bestätigenden Daten im zentralen Datenspeicher eine zumindest temporäre Sperre des Identifikationssenders hinterlegt wird.

7. Verfahren nach einem der Ansprüche 1 bis 6,
**dadurch gekennzeichnet,**
**dass** im zentralen Datenspeicher Beschränkungen für den Identifikationssender, insbesondere tägliche, wöchentliche und/oder monatliche Bezugsmengen und/oder Bezugsbudgets hinterlegt werden.

8. Verfahren nach einem der Ansprüche 1 bis 7,
**dadurch gekennzeichnet,**
**dass** im zentralen Datenspeicher Beschränkungen einer zu beziehenden Art des Brennstoffs, beispielsweise Dieselkraftstoff oder Ottokraftstoff auch unterschiedlicher Oktanzahlen für den Identifikationssender hinterlegt werden.

9. Verfahren nach einem der Ansprüche 1 bis 8,
**dadurch gekennzeichnet,**
**dass** dem Nutzer temporäre Auswertungen aus den Daten im zentralen Datenspeicher zur Verfügung gestellt werden, wobei auch Fahrzeugdaten, wie Kilometerstand oder dergleichen aus einem Fahrzeugdatenspeicher ausgelesen und an den zentralen Datenspeicher übermittelt werden.

10. Verfahren nach einem der Ansprüche 1 bis 9,
**dadurch gekennzeichnet,**
**dass** Betreibern von Tankstellen und/oder Ladestationen die Daten aus dem zentralen Datenspeicher anonymisiert übermittelt werden und darauf basierend eine Abrechnung erstellt wird.

11. Verfahren nach einem der Ansprüche 1 bis 10,
**dadurch gekennzeichnet,**
**dass** die Daten von der Leseeinrichtung zum zentralen Datenspeicher und vom zentralen Datenspeicher zur Leseeinrichtung bi-direktional übertragen werden und die Leseeinrichtung zu diesem Zweck zwei getrennte Sende-Empfangs-Vorrichtungen aufweist.

12. Vorrichtung zur Durchführung des Verfahrens nach einem der Ansprüche 1 bis 11, bestehend aus einem, an einem Fahrzeug angeordneten eineindeutigen Identifikationssender, einer den Identifikationssender auslesenden Leseeinrichtung an einer Zapfstelle und einem zentralen Datenspeicher zum Empfang, zur Verarbeitung und zur zumindest temporären Speicherung von durch die Leseeinrichtung aus dem Identifikationssender ausgelesenen Daten eines Nutzers, wobei die Daten über eine Datenverbindung dem zentralen Datenspeicher übermittelt und zur Verifizierung einer Berechtigung genutzt werden, wobei der zentrale Datenspeicher über eine Schnittstelle mit einer Abrechnungsvorrichtung verbunden ist und wobei der Identifikationssender im Bereich eines Einfüllstutzens des Fahrzeugs befestigt ist und wobei die Leseeinrichtung im Bereich eines, insbesondere rohrförmigen, einen kreisrunden Querschnitt aufweisenden Zapfventils einer Zapfstelle angeordnet ist, wobei die Leseeinrichtung vorzugsweise ringförmig ausgebildet und auf das Zapfventil, dieses umgebend aufgesetzt ist.

13. Vorrichtung zur Durchführung des Verfahrens nach einem der Ansprüche 1 bis 11, bestehend aus einem, an einem Fahrzeug angeordneten eineindeutigen Identifikationssender, einer den Identifikationssender auslesenden Leseeinrichtung an einer Ladesäule und einem zentralen Datenspeicher zum Empfang, zur Verarbeitung und zur zumindest temporären Speicherung von durch die Leseeinrichtung aus dem Identifikationssender ausgelesenen Daten eines Nutzers, wobei die Daten über eine Datenverbindung dem zentralen Datenspeicher übermittelt und zur Verifizierung einer Berechtigung genutzt werden, wobei der zentrale Datenspeicher über eine Schnittstelle mit einer Abrechnungsvorrichtung verbunden ist, wobei der Identifikationssender im Bereich einer Steckdose für ein Ladekabel des Fahrzeugs befestigt ist, wobei die Leseeinrichtung im Bereich einer Steckdose zur Aufnahme des Ladekabels in die Ladesäule angeordnet ist und wobei Daten über das Ladekabel kabelgebunden aus der Leseeinrichtung auslesbar oder über diese in die Leseeinrichtung übertragbar sind.

14. Vorrichtung nach einem der Ansprüche 12 oder 13, **dadurch gekennzeichnet**, **dadurch gekennzeichnet, dass** zwischen der Leseeinrichtung und dem zentralen Datenspeicher eine bi-direktionale Datenübertragungseinrichtung angeordnet ist, wobei die Leseeinrichtung zwei getrennte Sende-Empfangs-Vorrichtungen aufweist.

15. Vorrichtung nach einem der Ansprüche 12 bis 14, **dadurch gekennzeichnet, dass** die Abrechnungsvorrichtung eine Schnittstelle zum Anschluss einer Datenverarbeitungseinrichtung einer, Zahlungen ausführenden Einrichtung aufweist.
